# EUROPEAN PATENT SPECIFICATION

(11) **EP 1 385 743 B1**
(45) Date of publication and mention of the grant of the patent: **09.07.2008**
(21) Application number: 02730247.0
(22) Date of filing: 08.05.2002
(51) Int. Cl.: B65B 51/30, B65B 9/12

(54) **A PACKAGING MACHINE**
VERPACKUNGSMACHINE
MACHINE D'EMBALLAGE

(30) Priority: 09.05.2001 SE 0101594
(43) Date of publication of application: 04.02.2004
(73) Proprietor: Tetra Laval Holdings & Finance SA, 1009 Pully (CH)
(72) Inventor: PALMNAS, Markus, 413 22 Göteborg (SE); PERSSON, Lars-Ebbe, 451 31 Uddevalla (SE)
(74) Representative: Jorio, Paolo
(86) International application number: PCT/EP2002/005080
(87) International publication number: WO 2002/090187

(56) References cited:
- EP-A- 0 271 758
- EP-A- 0 960 817
- EP-A- 1 028 056
- WO-A-00/06350
- GB-A- 1 072 287
- GB-A- 1 562 347

## Description

### TECHNICAL FIELD

The present invention relates to a packaging machine for packaging pourable food products and producing sealed packages. It comprises means for longitudinally sealing a web of continuous packaging material to form a tube, and sealing means for transversally clamping and sealing the product-filled tube at spaced intervals, which sealing means comprises a first two sets of mutually cooperating first heat sealing jaws and first counter sealing jaws respectively and a second two sets of mutually cooperating second heat sealing jaws and second counter sealing jaws respectively.

### BACKGROUND ART

It is well known in the art to produce packages for liquid or pourable food products from a roll of packaging material which comprise layers of fibrous material, such as paper, and which is covered on both sides with a thermoplastic material, e.g. polyethylene. The side of the packaging material that will be in contact with the food product in the package also comprises a layer of barrier material, e.g. an aluminium foil, which is coated with a thermoplastic material. To produce packages of the above mentioned kind, packaging machines are fed from a roll of packaging material in web form. The packaging material is sterilized, preferably in the packaging machine through the application of a chemical sterilization agent, for example a hydrogen peroxide solution. During the sterilization step the sterilization agent will also finally be removed from the surfaces of the packaging material, e.g. through heat vapourisation.

The sterilized packaging material is then formed into a tube which is longitudinally sealed. The tube is filled with a sterilized, pourable food product. Examples on such pourable food products are fruit juice, pasteurized or ultra-high temperature treated (UHT) milk, wine, tomato sauce, vanilla sauce or high viscosity products in general. The filled tube subsequently passes between pairs of endless chains with reciprocating members carrying sealing means, particularly heat sealing jaws on one pair of chains and counter sealing jaws on the other pair of chains, wherein the sealing means clamp and seal the tube at regularly spaced intervals. The resulting sealed packaging material bands are then cut between consecutive filled and sealed packages, thus giving a number of separate packages.

Different kinds of packages are known, e.g. parallelepiped packages and tetrahedral packages. The package known by the registered trademark Tetra Brik^{™} is one example of a parallelepiped package. To produce such packages two endless chain conveyors are provided. One of the chain conveyors is provided with a number of heat sealing jaws, and the other chain conveyor carries a number of counter sealing jaws. The two endless chain conveyors define respective endless paths which face each other and are parallel to each other, and between which the tube of packaging material is fed. The (heat sealing) jaws on one pair of endless chains cooperate with corresponding counter pressure sealing jaws on the other pair of endless chains in a reciprocating movement to clamp the tube equidistantly and to seal it such that transversal seals are provided. Pillow-shaped packages are produced, which then may be formed into the final shape, e.g. through folding, which however not is relevant for the present invention.

Tetrahedrally shaped packages, for example the packages known by the registered trademark Tetra Classic^{™} or Tetra Classic Aseptic^{™} are also well known. Then two pairs of endless chain conveyers are needed. Each pair consists of two endless chains carrying (heat) sealing jaws and two other endless chains carrying counter sealing jaws. During the clamping and sealing operation, which is carried out alternatingly by the jaws on the respective pairs, a first sealed band of material extending in a first direction is followed by a subsequent sealed band of material extending in a direction perpendicular to said first direction etc. in an alternating manner. In that way tetrahedrally shaped packages are produced.

Known examples on packaging machines as referred to above are the packaging machines known as TBA/22 available from Tetra Brik Packaging Systems, Via Delfini 1, Modena, Italy, for manufacturing parallelepiped packages known by the registered trademark Tetra Brik^{™}. This known machine comprises two pairs of fixed chains.

Known machines for producing tetrahedrally shaped Tetra Classic^{™}/Tetra Classic Aseptic^{™} are TC/TCA 65 available from TetraPak Stålvall, Sweden. Such machines comprise four pairs of fixedly mounted chains.

However, in order to be able to produce different types and/or sizes (volumes) of packages, such as for example both parallelepiped packages and tetrahedral packages, at least two packaging machines are needed. This is clearly disadvantageous and expensive, since a packaging machine is an expensive and voluminous machine. Each machine also requires a careful maintenance and involves a start-up time at starting up of production. There may for example be a need for packaging one and the same pourable food product in different types of packages and different sizes of packages e.g. depending on different market requirements etc. and it represents a high additional cost for a manufacturer to acquire, operate and maintain two or more different machines. In another aspect the driving mechanisms for driving the chain conveyors are complicated and tend to render the machine inflexible.

GB-A-1562347 discloses a wrapping machine having a single pair of sealing jaws which may cooperate or not for selectively sealing or not sealing one end of the tube of wrapping material extending around a relative article. This kind of wrapping machine is evidently not suitable for packaging articles defined by pourable or liquid products as, when one end of the tube of wrapping material is not sealed, the pourable product may leak out of such end. In practice, the machine disclosed in GB-A-1562347 is only suitable for producing sealed or not sealed packages.

### DISCLOSURE OF THE INVENTION

It is therefore an object of the present invention to provide a packaging machine, as initially referred to, through which one and the same packaging machine can be used for the manufacture of different types and/or sizes of packages. Particular it is an object of the invention to provide a packaging machine that can be used both for the manufacture of pillow shaped packages and for the manufacture of tetrahedrally shaped packages. More generally it is an object to provide a packaging machine which is flexible, and which increases the flexibility of the packaging machine as compared to hitherto known packaging machines. It is also an object to provide a packaging machine which allows the manufacture of a variety of packages normally manufactured in different machines to be manufactured in one and the same machine for packaging pourable food products. It is also an object to provide a packaging machine for which the operation and maintenance is facilitated.

Another particular object of the invention to enable manufacture of different types of packages at a lower cost and in an easier manner than what is known from the use of conventional packaging machines. Even more specifically it is an object to provide a packaging machine with a reduced number of constituent parts requiring support and maintenance, and that may broke, be worn out etc. It is also an object to provide a packaging machine for which time needed for starting up production can be reduced and through which it gets faster and easier to switch between the manufacturing of different types of packages.

Therefore a packaging machine as initially referred to and claimed in claim 1 is provided, in which at least one of said first and second sets of mutually or pairwise cooperating first and second two sealing jaws is manageable between a first and a second state to make the packaging machine operable in a first state and in a second state allowing manufacturing of different types of packages; said at least one of said first and second two sets are carried by chain conveyors which are movable between a first state corresponding to a first position and a second state corresponding to a second position wherein said first position corresponds to an operative position in which the respective sealing jaws are operable in clamping and sealing packages and wherein the second state or position is an inoperative position in which the sealing jaws of said set are inactive; if the sealing jaws of both said first and second two sets are in operative position, one type of packages can be manufactured, whereas if only one of the said first or second two sets is in an operative position, another type of packages can be manufactured. Particularly, if the chain conveyors of both of said first and second two sets are in operative position, tetrahedrally shaped packages can be manufactured whereas if only the chain conveyors of one of said first and second two sets are in operative position, for example pillow shaped packages can be manufactured. Particularly the chain conveyors of the first two sets are disposed at an angle of 90° with respect to the chain conveyors of the second two sets of sealing jaws.

In a particular implementation the first and second two sets each comprises two chain conveyors, one of which chain conveyors of said first and second two sets carrying a number of heat sealing jaws, whereas the other chain conveyors carrying a number of counter sealing jaws for pairwise cooperation with said heat sealing jaws. The packaging machine comprises a machine main frame and particularly the two chain conveyors of the first two sets are connected to a first and a second frame section, which are movably connected to said main frame. In an alternative implementation also the two chain conveyors of the second two sets are connected to each a frame section, here denoted a third and a fourth frame section which are movably connected to the main frame. In another implementation the two frame sections (the third and the fourth frame sections) are fixedly mounted to the main frame. The frame sections which are movably connected to the main frame may particularly be hinged to the main frame to make them easily movable between the first operative position and a second withdrawn, non-operative, position. The first and second two sets are particularly completely separate from one another, i.e. the first and second frame sections and third and fourth frame sections respectively are separately connected to the main frame, either in one and the same manner or in different manners, i.e. fixedly or movably, the main thing being that at least two frame sections (the first and second or the third and the fourth) are connected movably to the main frame, or to another part of the machine, making them displaceable between an operative and an inoperative position. The first and the second frame sections are disposed at an angle of 180° with respect to one another.

In a particular implementation, in order to provide a machine with reduced costs for acquiry, operation, and maintenance, and with a reduced number of parts, only one of the chain conveyors in a cooperating two sets, on one of which sealing jaws of heat sealing jaw type are mounted whereas on the other sealing jaws of counter sealing jaw type are provided, is driven by driving means. The other, cooperating, chain conveyor is according to that embodiment entrained by means of the sealing pressure produced or exerted between the heat sealing jaws and the counter sealing jaws mounted on the chain conveyors and cooperating during the clamping and sealing operation. Such a concept is applicable irrespectively of whether there are two or four sets of sealing jaws, and it is also applicable if there are actually four sets of sealing jaws allowing production of different types of packages, but wherein only one set is driven by the other, whereas the other two sets both are actively driven. In one such implementation, the chain conveyors of two adjacent frame sections are driven by driving means comprising a chain system and a driving motor. Such two adjacent frame sections are disposed at an angle of 90° with respect to one another, and do thus not carry jaws cooperating with one another.

In an embodiment in which one chain conveyor is indirectly driven by means of the sealing jaws on the cooperating chain conveyor, the sealing jaws are provided with low friction runner elements. According to different embodiments the heat sealing jaws are driven by the counter sealing jaws, or vice versa. Particularly the driven sealing jaws are mounted to the corresponding chain conveyor via low friction runner elements, most preferably, however, both types of sealing jaws are mounted to the respective chain conveyor via such low friction runner elements. In a preferred implementation the low friction runner elements comprise bearings, e.g. ball bearings or roller bearings, which here more particularly are mounted pairwise on the rear side of the respective sealing jaw. Particularly two ball bearings are mounted on the upper, rear part of the sealing jaw whereas two ball bearings are mounted on the lower, rear part of the sealing jaw. Particularly the contact surface of a sealing jaw contacting the web during the clamping and sealing step, comprises a high friction element, e.g. of rubber, or an elastomere in general, as is known in the art.

It has thus been realized that driving means only are required for one of the chain conveyors of two cooperating chain conveyors carrying pairwise cooperating sealing jaws due to the fact that a high sealing pressure is produced between the cooperating sealing jaws which is further assisted by low friction runner elements. Particularly, to allow for a such an implementation, each heat sealing jaw (counter sealing jaw) comprises first (second) guiding means for guiding the heat sealing jaw (counter sealing jaw). Particularly said first guiding means cooperate with corresponding second guiding means on the cooperating sealing jaw. The heat sealing jaw may e.g. comprise a fork shaped portion and the second guiding means on the counter sealing jaw may comprise a protrusion to be mated with said forked portion. Of course also other alternatives are possible. Particularly the guiding means in addition act as positioning means. Particularly said positioning functionality is needed to correctly position a knife, as disposed in any appropriate conventional manner, for cutting the web after clamping and sealing, with respect to a groove provided in the contact surface of the cooperating sealing jaw to assure that the packaging material bands are cut on the appropriate locations.

The guiding and positioning means may of course also be provided for in any other appropriate manner.

In a particularly advantageous packaging machine both the concept of only driving one of the chain conveyors of a pair, i.e. only providing for driving means with respect to one of the chain conveyors, and the concept of at least two frame sections, carrying cooperating sealing jaws on chain conveyors, being movable with respect to the main frame or even detachable from it.

For the making of a packaging machine, which is most advantageous in that it simple as compared to hitherto known machines, has low maintenance requirements and which comprises a reduced number of parts, a packaging machine for packaging pourable food products, and producing sealed packages, is provided, which comprises means for longitudinally sealing a web of continuous packaging material to form a tube, and pairwise cooperating sealing means for clamping and sealing the product-filled tube at regularly spaced intervals, wherein the sealing means comprise a set of heat sealing jaws cooperating with a set of counter sealing jaws mounted on respective chain conveyors. In a first implementation-only one of the chain conveyors is driven by driving means, whereas the sealing jaws on the other chain conveyor are entrained by means of the sealing pressure exerted between cooperating sealing jaws, i.e. cooperating heat sealing jaws and counter sealing jaws, during the clamping and sealing step. Such an implementation may with advantage be implemented in combination with movably mounted frame sections with chain conveyors as referred to above. Particularly the chain conveyor carrying the heat sealing jaws is driven by driving means whereas the sealing jaws are provided with low friction runner elements, e.g. ball-bearings. Such bearings may be mounted pairwise on the rear side of the respective sealing jaws. The front side of the sealing jaws, here meaning both heat sealing jaws and counter sealing jaws, are provided with guiding or engaging means, e.g. in the form of a fork shaped portion with a recess on one type of sealing jaws for taking up a protrusion arranged on the other type of sealing jaws. Even more particularly the guiding (and positioning) means are used to assure that the jaws are correctly positioned with respect to one another by means of using the (known) knives on the counter sealing jaws. Of course also other types of guiding or engagement means may be provided, the main thing being that it has been realized that only one of the chain conveyors in a cooperating pair of chain conveyors need to be actively driven by active driving means, e.g. a driving motor driving a chain wheel. Particularly the driving means may comprise a driving motor and a bevel gear for driving two adjacent (i.e. not carrying cooperating sealing jaws) chain conveyors. This relates to an implementation with four frame sections allowing manufacture of tetrahedrally shaped packages as well as of pillow shaped packages.

It is an advantage of the invention that a flexible packaging machine is provided allowing the production of different types of packages and through which it is easy to switch between manufacture of different types of packages and through which the switching can be done fast. It is also an advantage that a machine can be provided in which only one of the chain conveyors in a pair of cooperating chain conveyors, carrying heat sealing jaws and counter sealing jaws respectively, needs to be driven.

It should however be clear that the first concept relating to a packaging machine allowing production of different types of packages is implementable irrespectively of whether all or only same of the chain conveyors are actively driven or not. Likewise a concept of only driving one of two chain conveyors is applicable irrespectively of whether the packaging machine allows production of different types of packages or not, or specifically, for a packaging machine with two frame sections which are fixedly mounted whereas two other frame sections for example are hinged to the main frame or if it comprises four movably (detachably) mounted frame sections.

### BRIEF DESCRIPTION OF THE DRAWINGS

The invention will in the following be further described in a nonlimiting manner, and with reference to the accompanying drawings, in which:
- FIG. 1: schematically illustrates a first frame section with an endless chain conveyor with a series of heat sealing jaws,
- FIG. 2: schematically illustrates a second frame section with an endless chain with a number of counter sealing jaws, for cooperation with said heat sealing jaws,
- FIG. 3: illustrates a heat sealing jaw according to one embodiment in which only one of the chain conveyors need to be driven,
- FIG. 4: shows a counter sealing jaw for cooperation with the heat sealing jaw of Fig. 3,
- FIG. 5: illustrates a packaging machine with four frame sections with chain conveyors with cooperating sealing jaws and counter sealing jaws respectively, wherein the four frame sections are in operative position,
- FIG. 6: shows the packaging machine of Fig. 5 with one frame section moved to an inoperative position, (the other frame sections not shown for reasons of clarity),
- FIG. 7: shows the packaging machine of Fig. 5 but wherein only two frame sections are in an operative position, the other two frame sections being removed,
- FIG. 8: schematically illustrates a packaging machine with one frame section in operative position and driving means for driving said frame section and another, adjacent, frame section (not shown), and
- FIG. 9: illustrates the driving means more in detail.

### BEST MODE FOR CARRYING OUT THE INVENTION

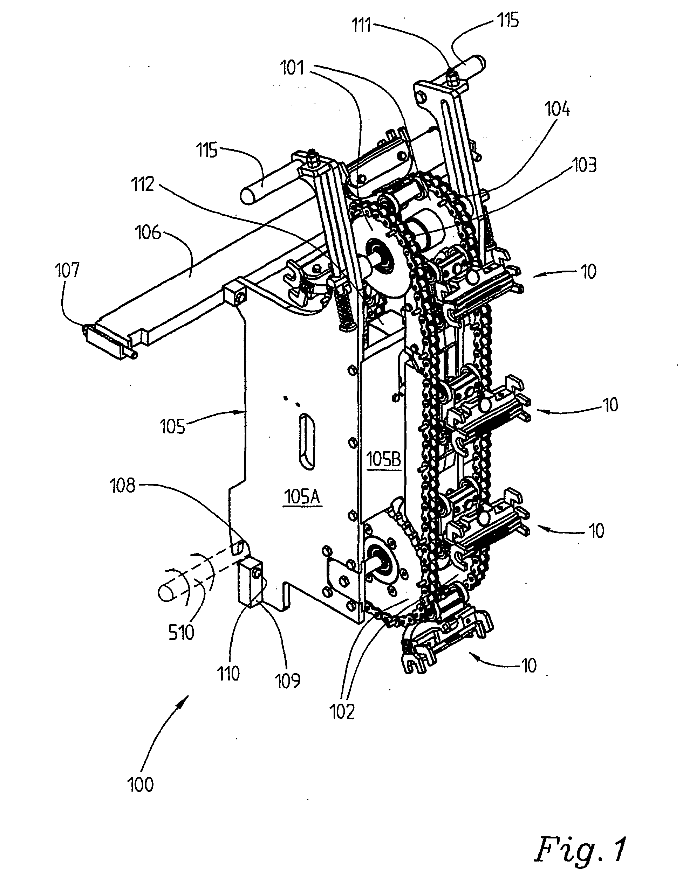

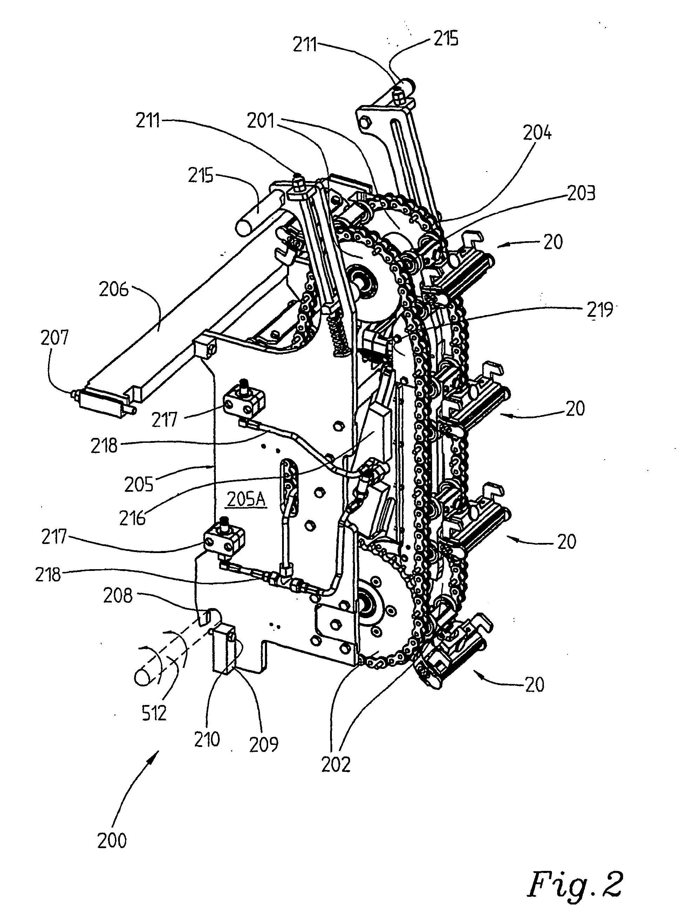

Fig. 1 illustrates a first frame section 100 comprising a housing 105 with a first chain conveyor comprising two chains 103, 104. The first chain conveyor defines a first endless path and a number of sealing jaws, here particularly heat sealing jaws 10, are provided on the chain conveyor. The heat sealing jaws 10, in an operative state, cooperate with counter sealing jaws provided on a second frame section 200 (cf. Fig. 2) comprising a chain conveyor defining a second endless path, between which paths a product-filled tube of packaging material is fed such that due to a reciprocating movement, cooperating jaws, at regular time intervals, will clamp and heat seal the product-filled tube such that separate packages are formed, which, at the end of the clamping and sealing operation, are separated from each other by means of a cutting element in a manner known per se, cf. e.g. the above mentioned patent application EP-A-0 887 263, or EP-A-0 887 265, which herewith are incorporated herein by reference.

The chain conveyor comprises upper bending wheels 101, 101 mounted on a shaft and lower chain wheels 102, 102 mounted on a shaft. According to the present invention the first frame section 100 is separate from the main frame of the packaging machine. In known packaging machines a portion carrying the chain conveyors are in one piece with the main frame of the machine or fixedly mounted thereto.

The frame section 100 comprises first frame connection means 106 in the form of a frame connection bar on the rear side of the housing 105 of frame section 100, i.e. perpendicular to the endless paths formed by the chain conveyors and facing the packaging machine main frame (not shown). The frame connection bar 106 is here detachably connected to the packaging machine main frame by means of first fastening means 107, 107 e.g. comprising screws or similar for fastening or securing the outer ends of the bar 106 to the main frame which are reachable from the outside of the packaging machine main frame. The frame connection bar 106 may either be formed in one piece with the frame section 100 or it may be fastened thereto by securing means, e.g. screws, bolts or similar. The frame section 100 is further connected to the machine main frame by second frame connection means 108, 108 which, in this embodiment, comprise recesses in which a respective shaft 510, rod or similar of the machine main frame is to be taken up. The frame section 100 here comprises three side walls of which two first, opposite, side walls 105A, 105A (only one shown in the figure) are identical, whereas a third side wall 105B is connected perpendicularly so as to interconnect the first two side walls 105A, 105A. Said third side wall 105B is a smaller sized front wall disposed between the two branches of the chains and it also carries the inducting heating equipment 112 used during the heat sealing steps. Adjacent to, and below, said recesses 108, 108 are securing elements 109 provided, which may be formed in one piece with the respective side wall 105A to which they are mounted, with through holes for taking up second fastening means 110, 110 to be mounted below said shafts or rods 510 for securing the frame section 100 to the main frame.

Fig. 1 shows the first frame section 100 in operative position. If the packaging machine is to operate without frame section 100, (and its counter part 200 to be illustrated in Fig. 2), the first fastening means 107, 107 are removed. In an advantageous embodiment gripping means 115, 115 are connected to the upper part of the frame section 105, allowing manually gripping the first frame section 100 and pivoting it around the shafts 510 taken up in the recesses 108, 108. The frame section will then still be pivotably secured to the shafts 510, 510 to prevent it from falling down etc., by the second fastening means 109, 109. The frame section 100 may be moved to a position forming substantially 90° with respect to the position of Fig. 1, i.e. it may be pivoted counterclockwise around the shafts 510, 510 to a position which corresponds to an inoperative, withdrawn, position. In this particular embodiment, by removing the second fastening means, here screws 109, 109 the first frame section 100 will be completely detached from the main frame and can simply be pulled out of the machine by pulling the gripping means 115,115.

It should be clear that the respective frame sections can be withdrawn from an operative position also in other manners, completely detached from the main frame or by moving it outwards in different manners, by pivoting it around an axis parallell with the endless paths etc., the main thing being that the chain conveyors mounted on the frame sections can be disposed in a first state or the position in which the sealing jaws disposed on the chain conveyors can be active in clamping and sealing, and another position in which they are out of position for being activated.

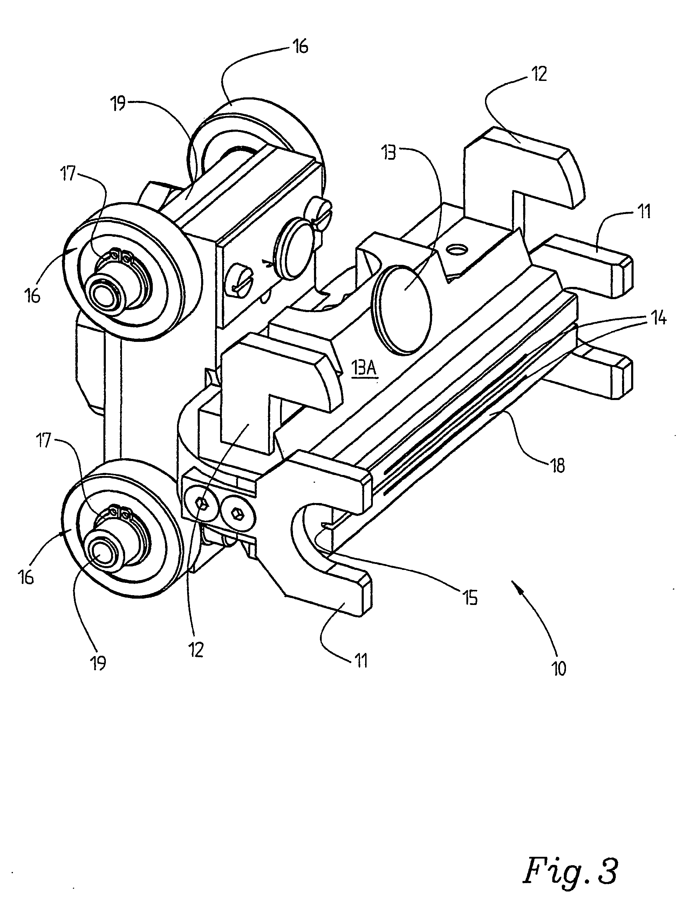

In Fig. 1 heat sealing jaws according to one particular implementation are illustrated as will be more thoroughly described with reference to Fig. 3. It should be clear, however, that also conventional heat sealing jaws can be used, the inventive concept still applies.

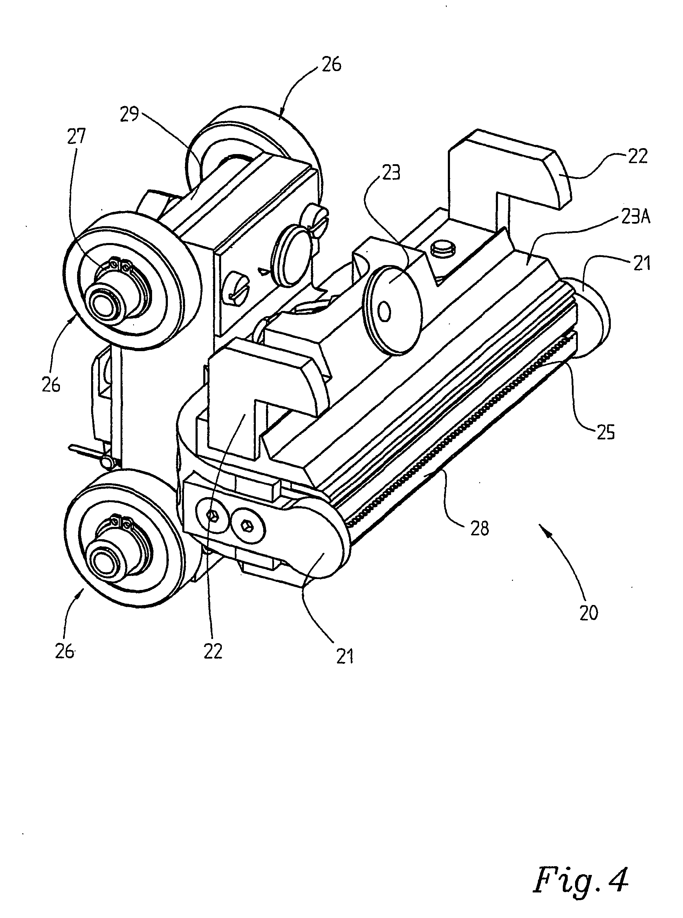

Fig. 2 illustrates a second frame section 200 comprising a housing 205 with a chain conveyor with two chains 203, 204 forming an endless path and with a number of counter sealing jaws 20 mounted for cooperating with the heat sealing jaws 10 of Fig. 1. The counter sealing jaws 20 will be more thoroughly described with reference to Fig. 4, and, similar to Fig. 1, the frame section 200 comprises upper bending wheels 201, 201 and lower chain wheels 202, 202.

The second frame section 200 is in other aspects similar to the first frame section 100 of Fig. 1, with the difference that different types of sealing jaws are provided on the respective frame sections for mutual cooperation in a clamping and heat sealing operation. In this embodiment also the second frame section 200 comprises a frame connection bar 206 connectable to the machine main frame via first fastening means 207, 207 in form of screws and second frame connection means comprising recesses 208, 208 for taking up main frame shafts 512, 512 forming pivot points for the frame section 200. As in Fig. 1 securing elements 210, 210 are disposed on the outer ends of either of the side walls 205A, 205A (only one of which is shown) and containing each a through hole for taking up a second fastening means in form of a screw 210 which, when it is in fastening position, extends below the shafts 512, 512 which thus will be enclosed by the recesses 208, 208 and the screws 210, 210.

In this embodiment, for moving the second frame section 200 to an inoperative position, the first fastening means 207, 207 are removed, and by pulling the gripping means 215, 215 outwards the second frame section 200 is pivoted counter clockwise around the main frame shafts 512, 512 in the recesses 208, 208 particularly with an angle of about 90°. The frame section 200 may then, if wanted, be removed from the packaging machine by simply removing the second fastening means 210, 210. The first and second frame sections 100, 200 are thus disposed at an angle of 180° with the respect to one another and detachably connected to opposite sides of the main frame of the packaging machine.

Hydraulical activating means 218 connected to the housing side wall 205A by connecting means 217, 217 and via spacer sections 216 are responsible for hydraulically driving plungers 219, 219 responsible for the reciprocating movement of the sealing jaws, which through the use of e.g. ball bearings 16, 17 (cf. Figs. 3,4) roll thereon.

Fig. 3 shows a heat sealing jaw 10 according to one embodiment of the present invention.

Fig. 4 illustrates a counter sealing jaw 20 for cooperation with the heat sealing jaw 10 to clamp and heat seal a tubular web continuously fed therebetween. As in the state of the art machines the sealing jaws 10, 20 are driven in a reciprocating manner to, at regularly spaced intervals, clamp and seal the web between them such that transversal seals are produced. The two sets of sealing jaws 10, 20 are connected to endless chains 103, 104; 203, 204 as illustrated in Figs. 1 and 2. For the production of tetrahedrally shaped packages another two sets of such chain conveyors are provided perpendicularly to the aforementioned chain conveyors, and cooperating jaws on the pairwise cooperating chain conveyors act alternatingly on the tubular web such that transversal seals will be provided and such that consecutive transversal seals form an angle of 90° with one another.

The heat sealing jaw 10 comprises a contact surface 18 which is covered by a high friction material e.g. a rubber material, or an elastomere in general, facilitating clamping of the tubular web. In a conventional manner also induction heating elements 14, 14 are provided between which a groove 15 is provided for cooperation with a cutting element or a knife on a cooperating counter sealing jaw 20 for, at the end of the clamping and heat sealing operation, separating sealed packages from one another. In one embodiment the heat sealing jaw 10 comprises volume adjusting means 13 by means of which a volume defining portion 13A can be controlled or adjusted. It should be clear that a volume defining portion also may be provided on the opposite side of the contact surface 18. To the volume defining portion or bracket 13A stops arms 12 are connected for preventing packages from being damaged at the end of the sealing sequence, when the jaws leave i.e. are rejected from, the packages.

In a particular implementation as discussed above the counter sealing jaws 20, i.e. the chain conveyor carrying the counter sealing jaws, is driven by means of the cooperation of each counter sealing jaw with a corresponding heat sealing jaw 10. (It should be clear that it of course also could be vice versa, i.e. that the chains carrying heat sealing jaws are driven by counter sealing jaws etc.) For that purpose the heat sealing jaw 10 comprises a first guiding means 11, here in the form of a fork shaped portion, for mating with a corresponding guiding element 21 (c.f. Fig. 4) on the counter sealing jaw 20, here comprising a protrusion. The guiding means 11, 21 advantageously serve the dual purposes of driving or entraining the chain conveyor, over the respective sealing jaws connected thereto, which is not driven by specific driving means, and to position each heat sealing jaw 10 with respect to a cooperating counter sealing jaw 20 such that the cutting means, e.g. the knife 25, of the counter sealing jaw 20, and the groove 15 of the heat sealing jaw are correctly located with respect to one another. It is important that cutting means and corresponding groove are correctly positioned with respect to each another, to ensure that the cutting operation can be performed on the appropriate location, otherwise the production might have to be interrupted, packages might have to be disposed of etc.

The heat sealing jaw 10 is furthermore provided with runner elements 16 arranged on the rear side of the sealing jaw 10 which comprise ball bearings to provide for low friction runner elements substantially rolling on the plungers. Since there will be almost no resistance (cf. state of the art sealing jaws which generally comprise runners for sliding on the plungers) preferably runners 16 comprising ball bearings are disposed pairwise on the upper and the lower portions at the rear part of the sealing jaw. The ball bearings are mounted on shafts 19 to which they are secured or connected by retaining rings 17, 17.

According to the present invention it has been realized that through the use of cooperating guiding means, and further assisted by high friction elements 18, which already are known to be used on sealing jaws, in combination with the provision of low friction runner elements 16 comprising ball bearings or roller bearings or similar, making the movement of the sealing jaws substantially friction-less, it is not necessary to actively or externally drive both of the chain conveyors carrying the cooperating sealing jaws.

Similar to the heat sealing jaw, the counter sealing jaw 20 comprises volume defining portions 23A, 23A (only one shown) with volume adjusting means 23, stop arms 22, 22 and a contact surface 28 of a high friction material, It also comprises a knife 25 to be co-located with a groove 15 in a cooperating heat sealing jaw for the cutting operation when finished packets are separated from each another. Second guiding means 21, 21 are provided which here comprise protruding portions mating with the recesses of the first guiding means 11, 11 of the heat sealing jaw 10. It should be clear that both the first and the second guiding means can be made in one piece with the respective sealing jaw, e.g. with the volume defining portions or that they can be separate from, but connected to the sealing jaw in one way or another. Similar to the heat sealing jaw, the counter sealing jaw 20 is provided with four low friction runner elements 26 on the rear side comprising ball bearings which are mounted on shafts 29, 29 and secured thereto by retaining means 27, 27.

Also other kinds of guiding means can be used which function in an equivalent way, and it is also irrelevant on which type of sealing jaw a given type of guiding means is located.

It should be clear, however, that also other types of sealing jaws can be used for implementing the concept of at least providing a packaging machine that can be used for the production of more than one type of packages by means of movable frame sections that one pair of sets of cooperating sealing jaws can be moved out of operative position. Examples on such sealing jaws are for example illustrated in the Swedish Patent Application No. 0001477-9 filed by the same applicant on April 20, 2000, and which herewith is incorporated herein by reference.

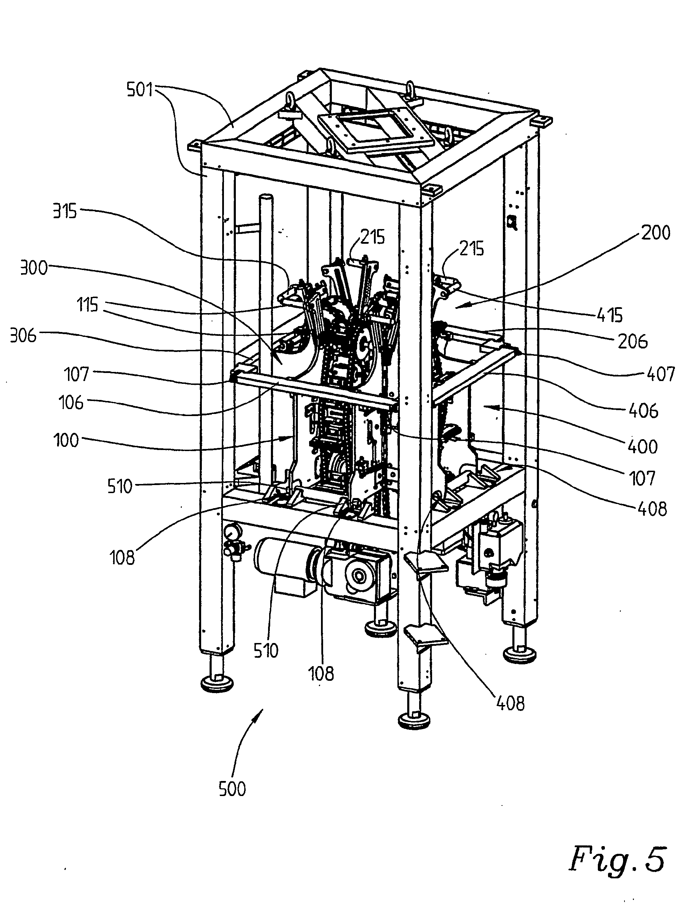

Fig. 5 schematically illustrates a packaging machine 500 comprising a main frame 501, to which four frame sections 100, 200, 300, 400 are attached, which means that the packaging machine can be used for the production of tetrahedrally shaped packages. The cooperating frame sections 100, 200 are more thoroughly described with reference to Figs. 1 and 2. The detailed description relating to frame sections 100, 200 is also applicable to cooperating frame sections 300, 400 in an embodiment in which all frame sections are movably mounted. Frame section 100 is connected to the main frame 501 by means of first, upper, frame connecting means 106 fastened to the main frame 501 by first fastening means 107, 107 and second, lower, frame connecting means 108, 108. The second frame section 200 is connected to the opposite side of the main frame 501 whereas frame section 300 is mounted at 90° with respect to said first and second frame sections to the main frame 501, opposite to the fourth frame section 400. The frame sections 100, 200, 300, 400 are provided with gripping means 115, 115; 215, 215; 315, 315; 415, 415. Only some of the first fastening means, here screws 107, 107; 207, 207; 307, 307; 407, 407 etc., are illustrated in the figure for reasons of clarity. If said first fastening means are removed, or inactivated, and by gripping the gripping means, the respective frame sections can be pivoted outwards, rotated counterclockwise, around shafts 510, 510 connected to the main frame and extending through the recesses 108, 108.

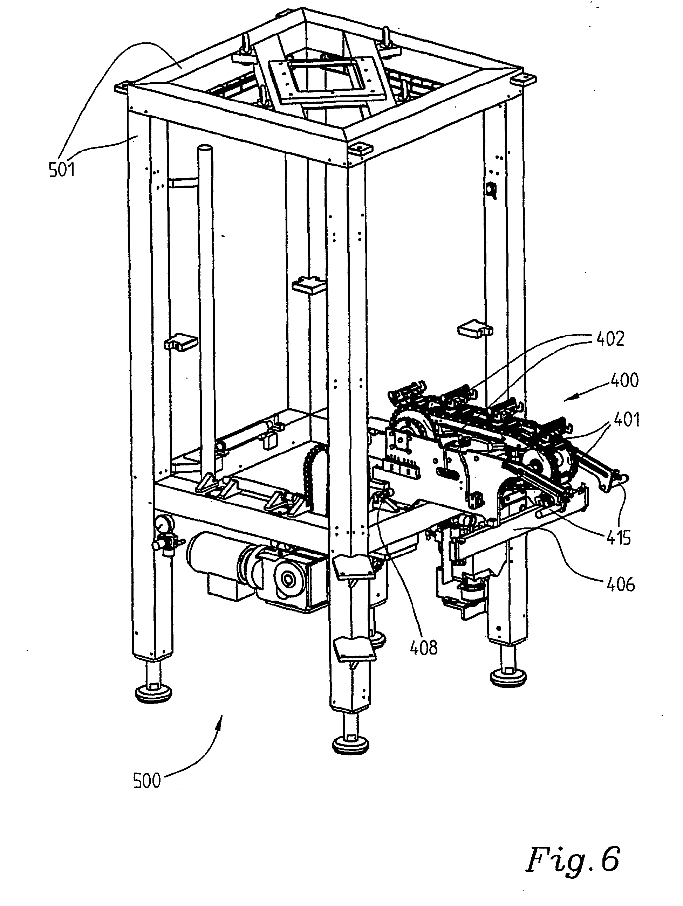

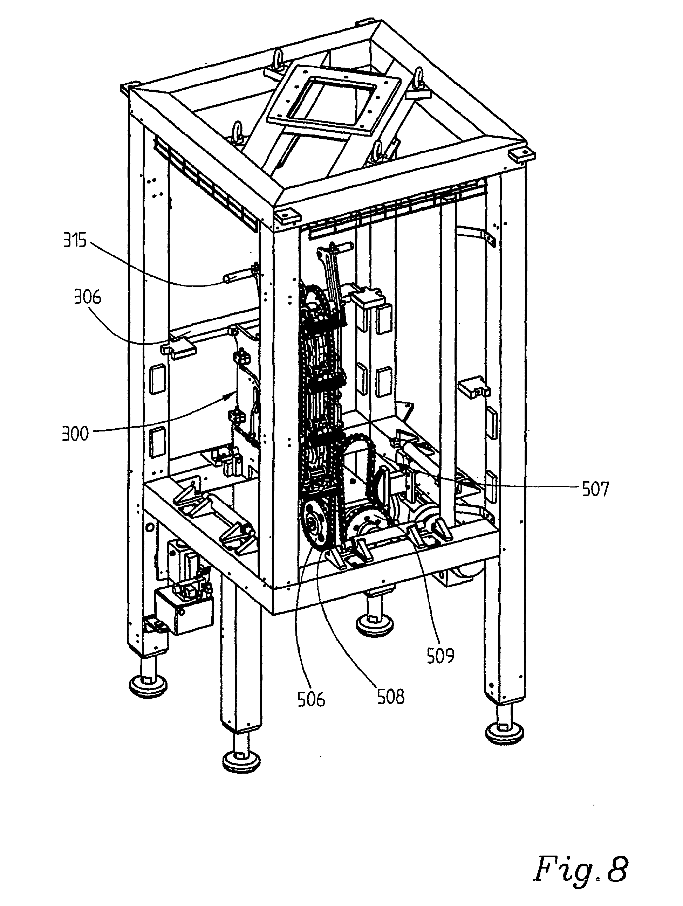

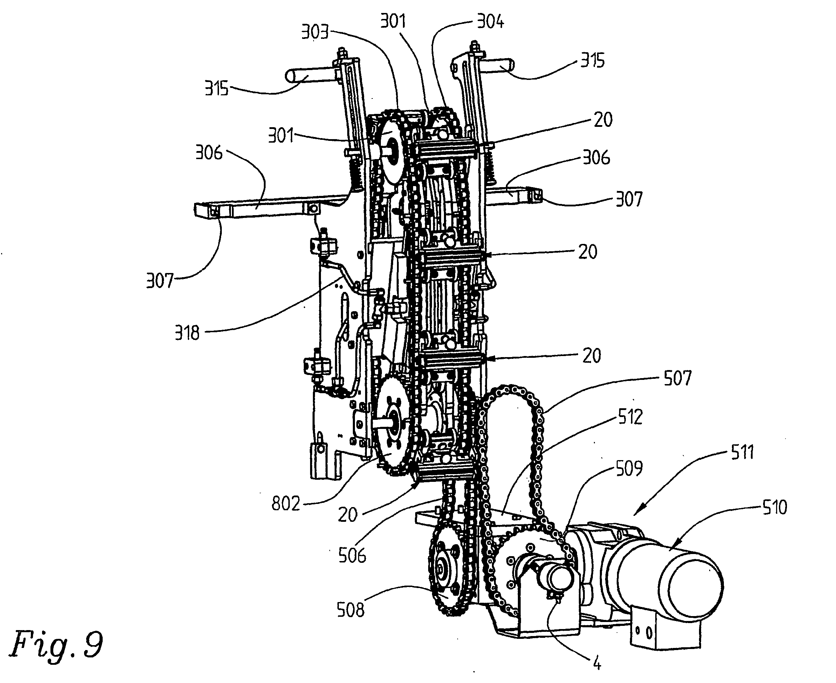

Fig. 6 is a figure similar to that of Fig. 5 but wherein the fourth frame section 400 is in a withdrawn, non-operative position. It has been pivoted 90° outwards with respect to the operative position. For reasons of clarity the first, second and third frame sections are not illustrated in the figure. If the fourth frame section 400 is withdrawn, also frame section 300 should be withdrawn. This is done in the same manner. The driving means driving, here, two chain conveyors disposed at 90° with respect to each other, and thus not carrying cooperating sealing jaws, will be more thoroughly described with reference to Figs. 8 and 9.

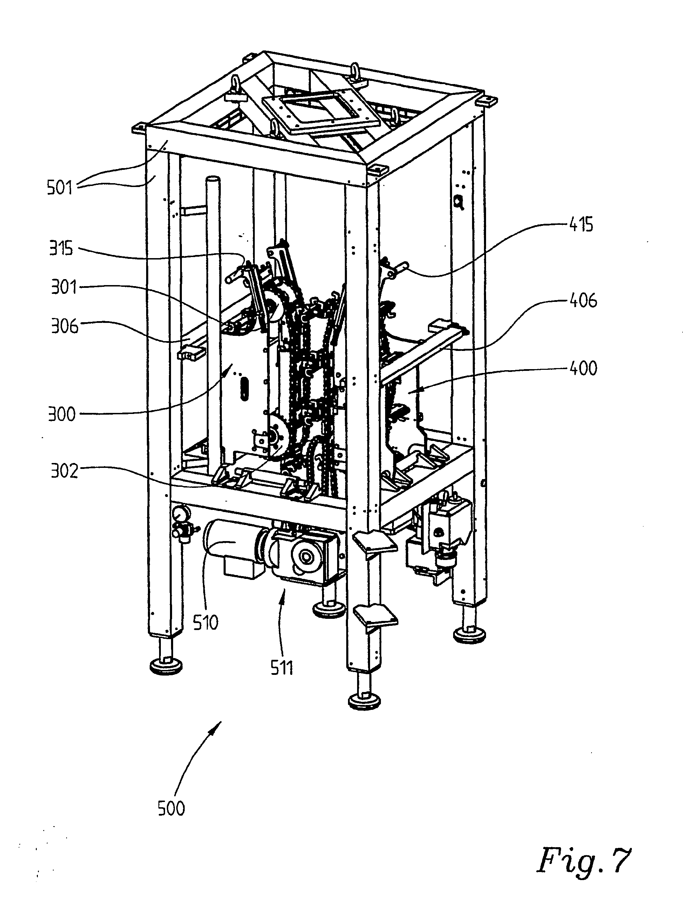

Fig. 7 also shows a machine similar to that of Fig. 5 but with the difference that two frame sections, here frame section 100 and frame section 200, have been entirely removed from the machine, which thus is operable for the manufacture of for example pillow shaped packages. It is here supposed that two frame sections have been detached from the main frame 501 by removing the second fastening means 110 (cf. Fig. 1) and 210 (cf. Fig 2). In Figs. 6 and 7 it is supposed that the chain conveyors of frame sections 100 and 400 are commonly driven by driving means whereas the chain conveyors of frame sections 200 and 300 are driven indirectly by means of the sealing jaws connected to the chain conveyors of frame sections 100 and 400 cooperating with the sealing jaws of the respective cooperating type of frame sections 200 and 300.

Fig. 8 schematically illustrates a packaging machine 500 with a main frame 501 to which only one frame section 300 is connected for reasons of clarity. Frame section 300 comprises a series of counter sealing jaws mounted on a driven chain conveyor with a pair of chains 303, 304, upper bending wheels 301, 301 and lower chain wheels 302, 302, (302). A driving motor drives a chain arrangement comprising two perpendicular chains 506, 507 driven by perpendicularly disposed driving wheels or chain wheels 508, 509 such that the chain wheel 508 drives the chain wheel 302 by means of an additional chain wheel (not shown in the figure) whereas the perpendicularly disposed chain 507 drives an additional chain wheel of the chain conveyor of for example frame section 100 adjacent to and forming 90° with respect to the frame section 300. Since adjacent and perpendicular frame section chain conveyors are actively driven by the driving means, one of the driven frame sections can be removed without affecting the other driven frame section which still drives the chain conveyor of the confronting frame section with which it cooperates.

Fig. 9 illustrates somewhat more in detail the driving of the third frame section 300 and it is also illustrated how an adjacent, perpendicular frame section would be driven by the same driving means. Other parts have already been explained with reference to the other drawings and will therefore not be further described herein.

The driving means comprises a motor 510 and a bevel gear 511 comprising two orthogonal driving chain wheels 508, 509 on which driving chains 506, 507 are provided of which driving chain 506 drives the third chain wheel (not visible in the figure) disposed on the same shaft as chain wheels 302, 302.

It should be clear that the invention can be varied in a number of ways without departing from the scope of the appended claims. It is also possible to separately drive the chain conveyors of each frame section or to use respective separate driving means for driving two adjacent, perpendicularly disposed frame sections. Also other alternatives are possible.

## Claims

1. A packaging machine (500) for packaging pourable food products and producing sealed packages, comprising means for longitudinally sealing a web of continuous packaging material to form a tube, and sealing means for clamping and sealing the product-filled tube at spaced intervals, wherein said sealing means comprises a first two sets of mutually cooperating first heat sealing jaws (10) and first counter sealing jaws (20) respectively, and a second two sets of mutually cooperating second heat sealing jaws (10) and second counter sealing jaws (20) respectively, **characterized in that** the sealing jaws (10, 20) of at least one of said first and second two sets are carried by chain conveyors which are manageable between a first operative position and a second inoperative position to make the packaging machine operable in a first state and in a second state, and **in that**, when the chain conveyors of one of said first and second two sets are in an operative position, whereas the chain conveyors of the other of said first and second two sets are in an inoperative position, a first type of packages is manufactured, and, when both the chain conveyors of said first two sets and the chain conveyors of said second two sets are in an operative position, a second type of packages is manufactured.

2. A packaging machine according to claim 1, **characterized in that** the packages of said first type are pillow shaped packages.

3. A packaging machine according to claim 1, **characterized in that** the packages of said second type are tetrahedrally shaped packages.

4. A packaging machine according to claim 1, **characterized in that** the chain conveyors of each set of said first two sets are disposed at an angle of 90° with respect to the chain conveyors of each set of said second two sets.

5. A packaging machine according to claim 1, **characterized in that** the first two sets comprise a set with heat sealing jaws (10) and a set with counter sealing jaws (20), whereby said heat sealing jaws (10) are provided on a first chain conveyor mounted on a first frame section (100) and said counter sealing jaws are provided an a second chain conveyor mounted on a second frame section (200), and **in that** the heat sealing jaws (10) and counter sealing jaws (20) of said second two sets correspondingly are mounted via chain conveyors an a third and fourth frame section (300, 400).

6. A packaging machine according to claim 5, char1acterized in that it comprises a main frame (501) and in that at least the first and second frame sections (100, 200) are movably connected to said main frame (501).

7. A packaging machine according to claim 6, **characterized in that** the third and fourth frame sections (300, 400) are fixedly mounted to the main frame (501).

8. A packaging machine according to claim 6, **characterized in that** the third and fourth frame sections (300, 400) are movably connected to the main frame (500).

9. A packaging machine according to claim 8, **characterized in that** the third and fourth frame sections (300, 400) are hinged to the main frame (500) and movable between a first operative position and a second, withdrawn, non-operative position.

10. A packaging machine according to any one of claims 6 - 8, **characterized in that** at least two of said frame sections (100, 200; 300, 400) are detachably connected to the main frame (500).

11. A packaging machine according to any one of the preceding claims, **characterized in that** the heat sealing jaws of one of the first and the second two sets and the counter sealing jaws of the other of said first and second two sets are mounted on driven chain conveyors.

12. A packaging machine according to any one of claims 1 - 10, **characterized in that** only the heat sealing jaws or the counter sealing jaws are mounted on driven chain conveyors.

13. A packaging machine according to claim 11 or 12, **characterized in that** the chain conveyors of two non-cooperating frame sections (100, 300) disposed at substantially 90° with respect to one another are driven by common driving means (510, 511).

14. A packaging machine according to claim 12, **characterized in that** the non-driven chain conveyors (200, 400) are entrained by means of the sealing pressure produced between the cooperating heat sealing jaws and counter sealing jaws during the clamping and sealing step.

15. A packaging machine according to claim 14, **characterized in that** the heat sealing jaws (10) and/or the counter sealing jaws (20) are provided with low friction runner elements (16; 26) and **in that** a high friction is produced between the respective cooperating heat sealing jaws (101) and counter sealing jaws (201) by means of high friction elements (18) on the contact surface contacting the web during the clamping and sealing step.

16. A packaging machine according to claim 15, **characterized in that** the low friction runner elements (16; 26) comprise bearings disposed pairwise on the rear sides of the sealing jaws (10; 20).

17. A packaging machine according to any one of claims 14 - 16, **characterized in that** the heat sealing jaws (10) and the counter sealing jaws (20) are provided with first and second guiding means (11; 21) mating each other during clamping and sealing, enabling the non-driven chain conveyor(s) to be entrained by the sealing jaws mounted on driven chain conveyor(s).

## Patentansprüche

1. Verpackungsmaschine (500) zum Verpacken von schütt- bzw. fließfähigen Nahrungsmittelprodukten und zum Herstellen von versiegelten Verpackungen, umfassend Mittel zum Längssiegeln einer Bahn aus kontinuierlichem Verpackungsmaterial, um einen Schlauch zu bilden, sowie Versiegelungsmittel, um den mit dem Produkt befüllten Schlauch in Abständen einzuspannen und zu versiegeln, wobei die Versiegelungsmittel jeweils erste zwei Sätze wechselweise zusammenwirkender erster Heißsiegelungsbacken (10) und erste Gegensiegelungsbacken (20) und zweite zwei Sätze wechselweise zusammenwirkender zweiter Heißsiegelungsbacken (10) und zweite Gegensiegelungsbacken (20) aufweisen, **dadurch gekennzeichnet, dass** die Siegelungsbacken (10, 20) wenigstens eines der ersten und zweiten zwei Sätze von Kettenförderern getragen werden, die zwischen einer ersten Arbeitsstellung und einer zweiten Ruhestellung handhabbar sind, um die Verpackungsmaschine in einem ersten Zustand und in einem zweiten Zustand betreiben zu können, und dass, wenn sich die Kettenförderer eines der ersten und zweiten zwei Sätze in einer Arbeitsstellung befinden, während sich die Kettenförderer des anderen der ersten und zweiten zwei Sätze in einer Ruhestellung befinden, eine erste Verpackungsart hergestellt wird, und, wenn sich sowohl die Kettenförderer der ersten zwei Sätze und die Kettenförderer der zweiten zwei Sätze in einer Arbeitsstellung befinden, eine zweite Verpackungsart hergestellt wird.

2. Verpackungsmaschine nach Anspruch 1, **dadurch gekennzeichnet, dass** die Verpackungen der ersten Art kissenförmige Verpackungen sind.

3. Verpackungsmaschine nach Anspruch 1, **dadurch gekennzeichnet, dass** die Verpackungen der zweiten Art tetraederförmige Verpackungen sind.

4. Verpackungsmaschine nach Anspruch 1, **dadurch gekennzeichnet, dass** die Kettenförderer eines jeden Satzes der ersten zwei Sätze in einem Winkel von 90° in Bezug auf die Kettenförderer eines jeden Satzes der zweiten zwei Sätze angeordnet sind.

5. Verpackungsmaschine nach Anspruch 1, **dadurch gekennzeichnet, dass** die ersten zwei Sätze einen Satz mit Heißsiegelungsbacken (10) und einen Satz mit Gegensiegelungsbacken (20) umfassen, wobei die Heißsiegelungsbacken (10) auf einem ersten Kettenförderer vorgesehen sind, der auf einem ersten Rahmenabschnitt (100) befestigt ist, und die Gegensiegelungsbacken auf einem zweiten Kettenförderer vorgesehen sind, der auf einem zweiten Rahmenabschnitt (200) befestigt ist, und dass die Heißsiegelungsbacken (10) und die Gegensiegelungsbacken (20) der zweiten zwei Sätze entsprechend über Kettenförderer auf einem dritten und vierten Rahmenabschnitt (300, 400) befestigt sind.

6. Verpackungsmaschine nach Anspruch 5, **dadurch gekennzeichnet, dass** sie einen Hauptrahmen (501) umfasst, und dass wenigstens die ersten und zweiten Rahmenabschnitte (100, 200) beweglich mit dem Hauptrahmen (501) verbunden sind.

7. Verpackungsmaschine nach Anspruch 6, **dadurch gekennzeichnet, dass** die dritten und vierten Rahmenabschnitte (300, 400) starr am Hauptrahmen (501) befestigt sind.

8. Verpackungsmaschine nach Anspruch 6, **dadurch gekennzeichnet, dass** die dritten und vierten Rahmenabschnitte (300, 400) beweglich mit dem Hauptrahmen (500) verbunden sind.

9. Verpackungsmaschine nach Anspruch 8, **dadurch gekennzeichnet, dass** die dritten und vierten Rahmenabschnitte (300, 400) am Hauptrahmen (500) klappbar angeordnet und zwischen einer Arbeitsstellung und einer zweiten, zurückgezogenen, Ruhestellung bewegbar sind.

10. Verpackungsmaschine nach einem der Ansprüche 6 - 8, **dadurch gekennzeichnet, dass** wenigstens zwei der Rahmenabschnitte (100, 200; 300, 400) lösbar mit dem Hauptrahmen (500) verbunden sind.

11. Verpackungsmaschine nach einem der vorhergehenden Ansprüche, **dadurch gekennzeichnet, dass** die Heißsiegelungsbacken des einen der ersten und zweiten zwei Sätze und die Gegensiegelungsbacken des anderen der ersten und zweiten zwei Sätze auf angetriebenen Kettenförderern befestigt sind.

12. Verpackungsmaschine nach einem der Ansprüche 1 - 10, **dadurch gekennzeichnet, dass** nur die Heißsiegelungsbacken oder die Gegensiegelungsbacken auf angetriebenen Kettenförderern befestigt sind.

13. Verpackungsmaschine nach Anspruch 11 oder 12, **dadurch gekennzeichnet, dass** die Kettenförderer von zwei nicht zusammenwirkenden Rahmenabschnitten (100, 300), die im Wesentlichen 90° zueinander angeordnet sind, durch gemeinsame Antriebsmittel (510, 511) angetrieben werden.

14. Verpackungsmaschine nach Anspruch 12, **dadurch gekennzeichnet, dass** die nicht angetriebenen Kettenförderer (200, 400) mithilfe des Versiegelungsdrucks mitgezogen werden, der zwischen den zusammenwirkenden Heißsiegelungsbacken und den Gegenback während des Klemm- und Versiegelungsschritts erzeugt wird.

15. Verpackungsmaschine nach Anspruch 14, **dadurch gekennzeichnet, dass** die Heißsiegelungsbacken (10) und/oder die Gegensiegelungsbacken (20) mit reibungsarmen Laufelementen (16; 26) ausgestattet sind, und dass eine hohe Reibung erzeugt wird zwischen den entsprechenden zusammenwirkenden Heißsiegelungsbacken (101) und den Gegensiegelungsbacken (201) mithilfe reibungsstarker Elemente (18) auf der Kontaktfläche, die die Bahn während des Klemm- und Versiegelungsschritts berührt.

16. Verpackungsmaschine nach Anspruch 15, **dadurch gekennzeichnet, dass** die reibungsarmen Laufelemente (16; 26) Lager aufweisen, die paarweise auf den Rückseiten der Siegelungsbacken (10; 20) angeordnet sind.

17. Verpackungsmaschine nach einem der Ansprüche 14 - 16, **dadurch gekennzeichnet, dass** die Heißsiegelungsbacken (10) und die Gegensiegelungsbacken (20) mit ersten und zweiten Führungsmitteln (11; 21) versehen sind, die während des Klemmens und Siegelns ineinandergreifen und das Mitziehen des(der) nicht angetriebenen Kettenförderer(s) durch die Siegelungsbacken, die auf dem(den) angetriebenen Kettenförderer(n) befestigt sind, ermöglichen.

## Revendications

1. Machine d'emballage (500) pour emballer des produits alimentaires versables et produire des emballages fermés hermétiquement, comprenant des moyens pour fermer hermétiquement de manière longitudinale une bande d'un matériau d'emballage continu pour former un tube, et des moyens d'étanchéité pour serrer et fermer hermétiquement le tube rempli de produit à des intervalles espacés, dans laquelle lesdits moyens d'étanchéité comprennent deux premiers ensembles de premières mâchoires de thermoscellage (10) et de premières contre-mâchoires de scellage (20) coopérant mutuellement, respectivement, et deux seconds ensembles de secondes mâchoires de thermoscellage (10) et de secondes contre-mâchoires de scellage (20) coopérant mutuellement, respectivement, **caractérisée en ce que** les mâchoires de scellage (10, 20) d'au moins l'un desdits deux premiers et deux seconds ensembles sont portées par des transporteurs à chaîne qui sont manipulables entre une première position fonctionnelle et une seconde position non fonctionnelle pour faire que la machine d'emballage soit utilisable dans un premier état et dans un second état, et **en ce que**, lorsque les transporteurs à chaîne de l'un desdits deux premiers et deux seconds ensembles sont en position fonctionnelle, tandis que les transporteurs à chaîne de l'autre desdits deux premiers et deux seconds ensembles sont en position non fonctionnelle, un premier type d'emballages est fabriqué et, lorsqu'à la fois les transporteurs à chaîne desdits deux premiers ensembles et les transporteurs à chaîne desdits deux seconds ensembles sont en position fonctionnelle, un second type d'emballages est fabriqué.

2. Machine d'emballage selon la revendication 1, **caractérisée en ce que** les emballages dudit premier type sont des emballages en forme de coussin.

3. Machine d'emballage selon la revendication 1, **caractérisée en ce que** les emballages dudit second type sont des emballages en forme de tétraèdre.

4. Machine d'emballage selon la revendication 1, **caractérisée en ce que** les transporteurs à chaîne de chaque ensemble desdits deux premiers ensembles sont disposés à un angle de 90° par rapport aux transporteurs à chaîne de chaque ensemble desdits deux seconds ensembles.

5. Machine d'emballage selon la revendication 1, **caractérisée en ce que** les deux premiers ensembles comprennent un ensemble avec des mâchoires de thermoscellage (10) et un ensemble avec des contre-mâchoires de scellage (20) de sorte que lesdites mâchoires de thermoscellage (10) sont prévues sur un premier transporteur à chaîne monté sur une première section de châssis (100) et lesdites contre-mâchoires de scellage sont prévues sur un second transporteur à chaîne monté sur une seconde section de châssis (200), et **en ce que** les mâchoires de thermoscellage (10) et les contre-mâchoires de scellage (20) desdits deux seconds ensembles sont montées, de manière correspondante, via des transporteurs à chaîne et une troisième et une quatrième sections de châssis (300, 400) .

6. Machine d'emballage selon la revendication 5, **caractérisée en ce qu'**elle comprend un châssis principal (501) et **en ce qu'**au moins les première et seconde sections de châssis (100, 200) sont raccordées de manière mobile audit châssis principal (501).

7. Machine d'emballage selon la revendication 6, **caractérisée en ce que** les troisième et quatrième sections de châssis (300, 400) sont montées fixement au châssis principal (501).

8. Machine d'emballage selon la revendication 6, **caractérisée en ce que** les troisième et quatrième sections de châssis (300, 400) sont raccordées de manière mobile au châssis principal (500).

9. Machine d'emballage selon la revendication 8, **caractérisée en ce que** les troisième et quatrième sections de châssis (300, 400) sont raccordées par des charnières au châssis principal (500) et sont mobiles entre une première position fonctionnelle et une seconde position retirée, non fonctionnelle.

10. Machine d'emballage selon l'une quelconque des revendications 6 à 8, **caractérisée en ce qu'**au moins deux desdites sections de châssis (100, 200 ; 300, 400) sont raccordées de manière amovible au châssis principal (500).

11. Machine d'emballage selon l'une quelconque des revendications précédentes, **caractérisée en ce que** les mâchoires de thermoscellage de l'un des deux premiers et deux seconds ensembles et les contre-mâchoires de scellage de l'autre desdits deux premiers et deux seconds ensembles sont montées sur des transporteurs à chaîne qui sont entraînés.

12. Machine d'emballage selon l'une quelconque des revendications 1 à 10, **caractérisée en ce que** seules les mâchoires de thermoscellage ou les contre-mâchoires de scellage sont montées sur les transporteurs à chaîne qui sont entraînés.

13. Machine d'emballage selon la revendication 11 ou 12, **caractérisée en ce que** les transporteurs à chaîne de deux sections de châssis non coopérantes (100, 300) disposés sensiblement à 90° l'un par rapport à l'autre sont entraînés par des moyens d'entraînement communs (510, 511).

14. Machine d'emballage selon la revendication 12,
**caractérisée en ce que** les transporteurs à chaîne qui ne sont pas entraînés (200, 400) sont entraînés au moyen de la pression de scellage produite entre les mâchoires de thermoscellage et les contre-mâchoires de scellage qui coopèrent pendant l'étape de serrage et de scellage.

15. Machine d'emballage selon la revendication 14, **caractérisée en ce que** les mâchoires de thermoscellage (10) et/ou les contre-mâchoires de scellage (20) sont prévues avec des éléments de roulement à faible frottement (16 ; 26) et **en ce qu'**un frottement élevé est produit entre les mâchoires de thermoscellage (101) et les contre-mâchoires de scellage (201) coopérantes respectives au moyen d'éléments à frottement élevé (18) sur la surface de contact qui est en contact avec la bande pendant l'étape de serrage et de scellage.

16. Machine d'emballage selon la revendication 15, **caractérisée en ce que** les éléments de roulement à faible frottement (16; 26) comprennent des paliers disposés par paires sur les bords arrière des mâchoires de scellage (10 ; 20).

17. Machine d'emballage selon l'une quelconque des revendications 14 à 16, **caractérisée en ce que** les mâchoires de thermoscellage (10) et les contre-mâchoires de scellage (20) sont prévues avec des premier et second moyens de guidage (11 ; 21) se couplant l'un avec l'autre pendant le serrage et le scellage, ce qui permet au(x) transporteur(s) à chaîne qui n'est (ne sont) pas entraîné(s), d'être entraîné(s) par les mâchoires de scellage montées sur le(s) transporteur(s) à chaîne qui est (sont) entraîné(s).
